# EUROPEAN PATENT SPECIFICATION

(11) **EP 2 389 316 B1**
(45) Date of publication and mention of the grant of the patent: **30.11.2016**
(21) Application number: 10701397.1
(22) Date of filing: 11.01.2010
(51) Int. Cl.: B65B 3/02, A61J 1/06, B29C 49/72, B65D 1/09

(54) **PROCESS FOR MANUFACTURING CONTAINERS FOR FLUID PRODUCTS OF THE MEDICAL, PHARMACEUTICAL, COSMETIC TYPE OR THE LIKE AND A CONTAINER THUS OBTAINABLE**
VERFAHREN ZUR HERSTELLUNG VON BEHÄLTERN FÜR FLÜSSIGE PRODUKTE WIE MEDIZINISCHE, PHARMAZEUISCHE, KOSMETISCHE ODER ÄHNLICHE PRODUKTE UND DAMIT HERSTELLBARER BEHÄLTER
PROCÉDÉ DE FABRICATION DE RÉCIPIENTS POUR DES PRODUITS LIQUIDES DE TYPE MÉDICAL, PHARMACEUTIQUE, COSMÉTIQUE OU SIMILAIRES, ET UN RÉCIPIENT SELON CE PROCÉDÉ

(30) Priority: 21.01.2009 IT MO20090013
(43) Date of publication of application: 30.11.2011
(73) Proprietor: LAMEPLAST S.p.A., Frazione Rovereto sul Secchia (MO) (IT)
(72) Inventor: FONTANA, Antonio, 41012 Carpi (MO) (IT)
(74) Representative: Brunacci, Marco
(86) International application number: PCT/IB2010/000030
(87) International publication number: WO 2010/084392

(56) References cited:
- EP-A- 0 539 169
- US-A1- 2004 149 774
- US-A1- 2007 138 215

## Description

### Technical Field

The present invention relates to a process for manufacturing containers for fluid products, particularly medical products, pharmaceuticals, cosmetics or the like.

### Background art

Within the pharmaceutical and cosmetics industry, but not only, the use is known of different types of single-dose or multi-dose containers arranged in strips.

In this respect, it is specified that a strip consists of a group of containers integral the one with the other and joined together along specific easy-to-tear weakened-section connection lines.

These strips are usually made by injection moulding of plastic material inside specific moulds.

Such moulds consist of one or more half-shells suitable for modelling the outer surface of the containers and in which can be fitted two or more cores suitable for modelling the inner surface of the containers.

Once the moulds have been assembled, in point of fact, between the half-shells and the cores a thin inter-space is defined into which the plastic material in molten form can be injected under pressure.

When the plastic material has solidified, the mould is opened and the strip of containers is removed from the relevant cores.

For this purpose, obviously, the containers are modelled without undercuts and, in point of fact, consist in a series of substantially tubular hollow bodies having an open extremity with a cross section with overall dimensions not below the rest of the hollow body, so as to allow the cores to be removed.

Through the open extremities, furthermore, the containers are subsequently filled with the fluid product to be packaged.

Finally, the open extremities are sealed; this operation involves crushing and deforming the edge of the open extremities and the formation of a sealing lip.

Following such deformation, therefore, at the open extremities the maximum overall dimension of the hollow bodies is determined by the length of the sealing lips, which is substantially greater than the rest of the hollow body.

The open extremities, therefore, which already show cross dimensions at mould exit not below those of the rest of the hollow bodies to allow removing the cores, once sealed end up by occupying even larger overall dimensions.

To prevent such increase in overall dimensions bringing the hollow bodies of the strip into contact, with the risk of hindering and irremediably jeopardising the sealing operation, the traditional strips are moulded so that between one container and another, spacing fins are formed connected together along the weakened-section connection lines.

At the end of the packaging process therefore, the strips consist in a series of containers which are arranged substantially parallel the one with the other and joined by means of spacing fins and which, at one extremity, have a sealing lip with dimensions increased with respect to the rest of the container.

The previously described manufacturing process is not without drawbacks, including the fact that it leads to the manufacture of strips with generally significant overall dimensions.

In this respect, it must be pointed out that, the number of containers in a strip being equal, the presence of the spacer fins, deriving from the particular manufacturing process described previously, considerably increases the distance between the two end containers of the strip and, therefore, the overall dimensions of same.

Overall dimensions being equal on the other hand, the presence of the spacing fins disadvantageously results in a strong limitation of the number of containers making up the strip, with consequent increase in packaging and transport costs which, inevitably, affect the retail price with the risk of making the products less interesting for the consumer.

Different processes for manufacturing containers for fluid products are disclosed in the patent documents US 2007/0138215, US 2004/0149774 and EP 0 539 169.

### Object of the Invention

The main aim of the present invention is to provide a process for manufacturing containers for fluid products, particularly medical products, pharmaceuticals, cosmetics or the like, that makes it possible to make containers of particularly compact dimensions and which can be shaped in the form of strips with particularly small overall dimensions.

Another object of the present invention is to provide a container for fluid products, particularly medical products, pharmaceuticals, cosmetics or the like which allows to overcome the mentioned drawbacks of the known art in the ambit of a simple, rational, easy, effective to use and low cost solution.

The above objects are achieved by the present process for manufacturing containers for fluid products of the medical, pharmaceutical, cosmetic type or the like, according to claim 1.

### Brief Description of the Drawings

Other characteristics and advantages of the present invention will become more evident from the description of a preferred, but not sole, embodiment of a process for manufacturing containers for fluid products of the medical, pharmaceutical, cosmetic type or the like, illustrated purely as an example but not limited to the annexed drawings in which:
the figure 1 is an axonometric view of the first phase of the process according to the invention;
the figure 2 is a section view of the first phase of the process according to the invention;
the figure 3 is a section view of the second phase of the process according to the invention;
the figure 4 is an axonometric view of a third phase of the process according to the invention;
the figure 5 is an axonometric view of a fourth phase of the process according to the invention;
the figure 6 is an axonometric view of a fifth phase of the process according to the invention;
the figure 7 is an axonometric view of a strip of containers obtainable with the process according to the invention.

### Embodiments of the Invention

With particular reference to such figures, globally by I, II, III, IV and V have been indicated the phases of the process for manufacturing containers for fluid products, particularly medical products, pharmaceuticals, cosmetics or the like. In this respect it must be specified that in the present treatise, by fluid products is not meant only liquid products but also viscous products, e.g., in paste or gel state, and powdered products, in particular very fine powders with great fluidity. The first phase I of the process according to the invention consists in modelling a layer of plastic material, e.g., polyethylene or the like, to form a semi-finished product 1 with tubular shape (parison).

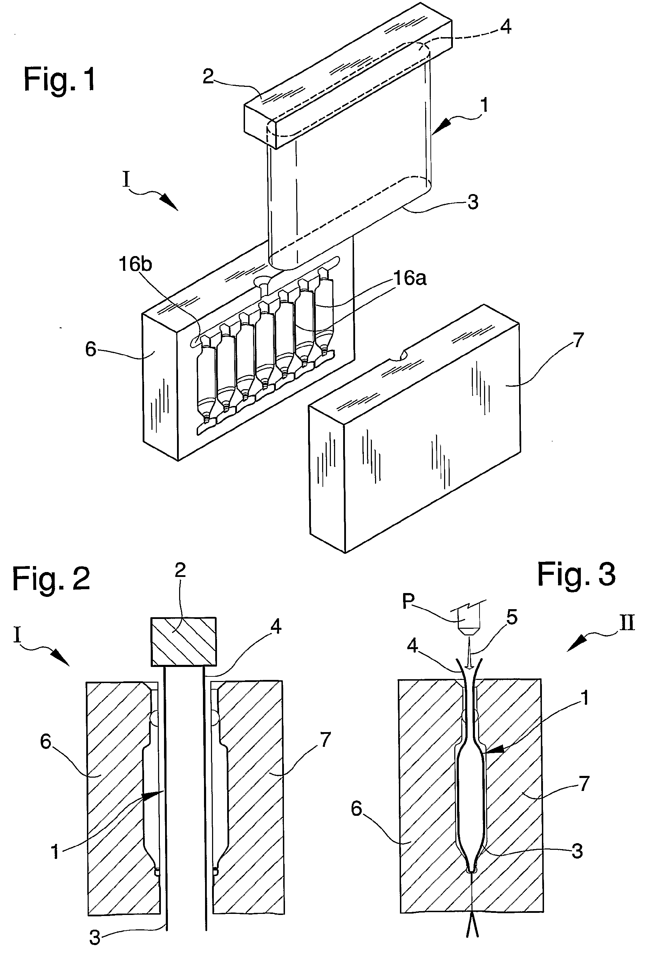

This modelling phase, in particular, consists in extruding the plastic material through an extruder die 2 (figures 1 and 2).

The tubular-shaped semi-finished product 1 thus has a first distal extremity 3 and a second proximal extremity 4, where the adjectives distal and proximal are used with reference to the distance from the extruder die 2.

The second phase II of the process consists in blowing an expansion gas 5 inside the semi-finished product 1 through the second extremity 4.

During this phase, the semi-finished product 1 is closed inside a forming mould 6, 7 which has a first half-shell 6 and a second half-shell 7.

The half-shells 6, 7 are modelled so that, during blowing, the first extremity 3 of the semi-finished product 1 is closed while the second extremity 4 remains in fluidic connection with a pneumatic nozzle P (figure 3); the filling with the expansion gas 5, therefore, causes the deformation of the walls of the semi-finished product 1, crushing them against the inner walls of the half-shells 6, 7, resulting in the formation of a strip 8 of containers 9 for fluid products.

For this purpose, the forming mould 6, 7 is modelled so as to provide each container 9 with a containment body 10 with substantially axial-symmetric shape elongated along a longitudinal direction D extending between the first extremity 3 and the second extremity 4; other embodiments of the containment bodies 10 cannot however be ruled out.

At the first extremity 3, furthermore, the containment bodies 10 of the strip 8 extend in a dispensing neck 11 closed by a corresponding closing cap 12 which, before use, is removable by tearing off the dispensing neck 11 to define a fluid product outflow mouth.

The forming mould 6, 7 is also modelled so that in the strip 8 formed inside the half-shells 6, 7, the containers 9 remain associated in a removable way the one with the other along respective first connection lines 13 defined on the containment bodies 10 and along respective second connection lines 14 defined on the closing caps 12.

Usefully, the first connection lines 13 and the second connection lines 14 extend substantially parallel to the longitudinal direction D of the containment bodies 10 and are defined by corresponding weakened sections which are modelled by means of specific closer portions 16a of the half-shells 6, 7, which cause the walls of the semi-finished product 1 to crush against one another.

Alternative embodiments cannot however be ruled out in which the connection lines 13, 14 are shaped differently.

Furthermore, the forming mould 6, 7 is modelled so that at the second extremity 4 of the semi-finished product 1 each containment body 10 extends in an open bottom tang 15.

Advantageously, the cross dimensions of the bottom tangs 15 are substantially smaller than the cross dimensions of the respective containment bodies 10.

For this purpose, it must be specified that in the present treatise by cross dimensions of an element is meant the overall dimensions which such element has along the direction transversal to the longitudinal direction D and, with respect to the strip 8, substantially laying on the laying plane of the strip 8.

To permit the filling of the semi-finished product 1 with the expansion gas 5, the forming mould 6, 7 has a particular shape 16b which, when the half-shells 6,7 are closed, closes on the second extremity 4 and permits modelling the semi-finished product 1 to define a fluidic connection duct to connect the bottom tangs 15 to the pneumatic nozzle P.

At the exit of the forming mould 6, 7, therefore, the fluidic connection duct makes up a reject portion 17 (feedhead) which will be removed from the bottom tangs 15.

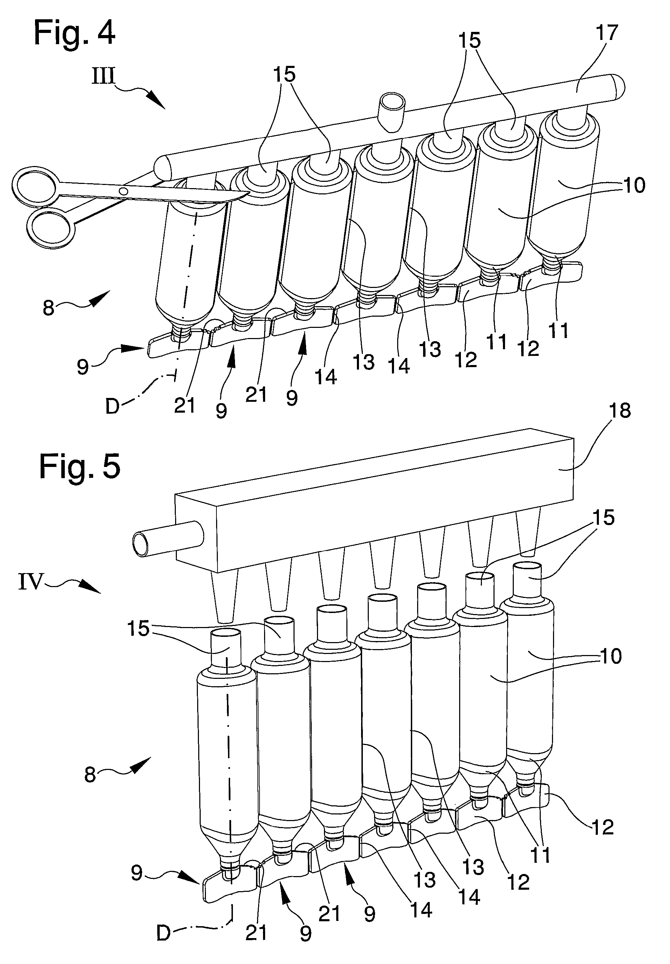

The third phase III of the process consists in removing such reject portion 17 from the bottom tangs 15 (figure 4).

This removal phase is defined, e.g., by the performance of a cutting-off operation (using cutters, circular saws or similar tools), or a cutting operation (e.g., laser cutting or using other cutting tools), or shearing operation (using shears or the like).

At the exit of the forming mould 6, 7, furthermore, it is possible that between the dispensing neck 11 of a container 9 and the dispensing neck 11 of the adjacent container 9 a part of the semi-finished product 1 remain trapped.

In this case, during the third phase III of the process, these parts can be removed so as to leave the dispensing necks 11 substantially separated and define between them a series of pockets 21.

Advantageously, at the end of the manufacturing process, the pockets 21 can be used as insertion openings for one or more collection rods, suitable for tidily arranging the strips 8 in specific trays.

The fourth phase IV of the process involves introducing the fluid product into the containment bodies 10 through the bottom tangs 15, an operation that can be performed by means of an injector 18.

Once filled, the containers 9 of the strip 8 undergo a fifth phase V of the process, which consists in sealing the bottom tangs 15 to form a sealing lip 19, substantially fan shaped.

This fifth phase V is obtained by crushing the open edges of the bottom tangs 15 and by sealing, e.g., of the hot type, ultrasonic type or other type, by means of two sealing bars 20.

The sealing bars 20 are designed to crush the bottom tangs 15 along a cross direction, in particular at right angles, to the containment bodies 10 and substantially coplanar to the lying plane of the strip 8.

Usefully, the cross dimensions of the bottom tangs 15 are such as to ensure that, at the end of sealing, the cross dimensions of the sealing lips 19 are substantially smaller than the cross dimensions of the containment bodies 10.

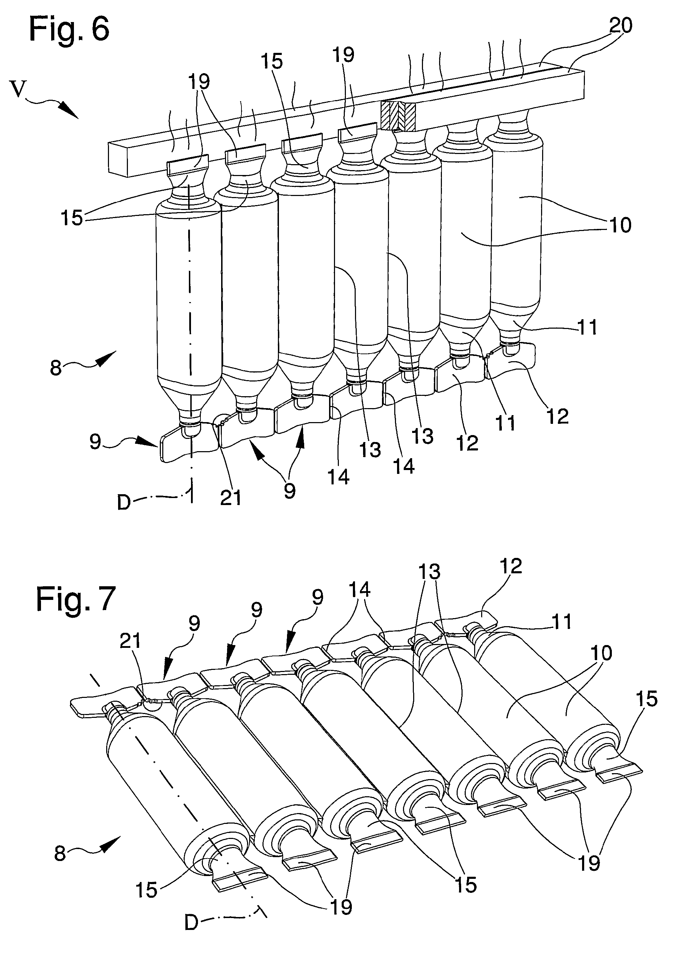

The containers 9 obtainable with the process just described are shown in the figure 7.

Each of them comprises one of the containment bodies 10 which, at a first extremity, has the dispensing neck 11 and the relative closing cap 12 and which, at a second opposite extremity, extends in the bottom tang 15 the terminal part thereof is closed by the sealing lip 19, the cross dimensions of the bottom tang 15 being substantially smaller than the cross dimensions of the sealing lip 19 which, in turn, are substantially smaller than the cross dimensions of the containment body 10.

Usefully, the containment bodies 10 are joined together in a removable way along the first connection lines 13 and the second connection lines 14 to form the strip 8.

The sealing lips 19 of the containers 9, furthermore, extend along a cross direction substantially coplanar to the lying plane of the strip 8.

It has in practice been found how the invention described achieves the intended objects.

In particular, the fact is underlined that the process according to the invention permits manufacturing containers with reduced cross dimensions and which can be joined together without the presence of spacer fins, which on the other hand is necessary for the strips obtained using traditional methods.

This way, the strips made using the process according to the invention can be more compact than the strips of known type or, space being equal, they can be made up of a greater number of containers, with lower packaging and transport costs of the fluid products.

## Claims

1. Process for manufacturing containers for fluid products of the medical, pharmaceuticals, cosmetic type or the like, comprising the following phases:
- modelling (I) by means of an extruder die (2) at least a layer of plastic material to form at least a substantially tubular semi-finished product (1) having a first extremity (3) and a second extremity (4);
- closing said tubular semi-finished product (1) inside a forming mould having two half-shells (6, 7), said two half-shells (6, 7) being modelled so that, when said semi-finished product (1) is closed inside the forming mould, the first extremity (3) of the semi-finished product (1) is closed while the second extremity remains in fluid connection with a pneumatic nozzle;
- blowing (II) an expansion gas (5) in said semi-finished product (1) through said second extremity (4) inside said forming mould (6, 7), to form at least a strip (8) of containers (9), so as to provide each container (9) with a containment body (10) for containing at least a fluid product that, at said first extremity (3), extends in a closed dispensing neck (11) and that, at said second extremity (4), extends in an open bottom tang (15),
wherein the cross dimensions of said bottom tangs (15) of the containers (9) are substantially smaller than the cross dimensions of said containment bodies (10) of the containers (9), and
wherein said containers (9) of the strip (8) are associated removable with each other along respective first connection lines (13) defined on said containment bodies (10) and along respective second connection lines (14) defined on said closing caps (12), with at least one of said first connection line (13) and said second connection line (14) being substantially longitudinal;
- introducing (IV) said fluid product in said containment bodies (10) through said bottom tangs (15); and
- sealing (V) said bottom tangs (15) to form a sealing lip (19) for each container (9), with the sealing lips (19) being formed along a cross direction substantially coplanar to the lying plane of said strip (8) and the cross dimensions of said sealing lips (19) being substantially smaller than the cross dimensions of said containment bodies (10), wherein the sealing phase is performed by crushing and by sealing the open edges of the bottom tangs (15) by means of two sealing bars (20).

2. Process according to claim 1, **characterized by** the fact that said modelling (I) comprises extruding said plastic material through at least a corresponding extruder die (2).

3. Process according to claim 1 or 2, **characterized by** the fact that said forming mould (6, 7) is modelled so as to equip said containment body (10) with a tear-off closing cap (12) removable from said dispensing neck (11).

4. Process according to one or more of the previous claims, **characterized by** the fact that said forming mould (6, 7) is modelled so as to equip said containment bodies (10) with a substantially axial-symmetric and elongated shape along a longitudinal direction (D) that extends between said first extremity (3) and said second extremity (4).

5. Process according to one or more of the previous claims, **characterized by** the fact that said forming mould (6, 7) is modelled so as to equip said containment body (10) with at least a reject portion (17) suitable for being removed from said bottom tang (15).

6. Process according to claim 5, **characterized by** the fact that it comprises removing said reject portion (17) from said bottom tang (15).

## Patentansprüche

1. Verfahren zur Herstellung von Behältern für fluide Produkte medizinischer, pharmazeutischer, kosmetischer Art oder dergleichen, welches die folgenden Phasen umfasst:
- Modellieren (I), mittels eines Extruderwerkzeugs (2), wenigstens einer Schicht aus Kunststoff, um wenigstens ein im Wesentlichen rohrförmiges Halbzeug (1) mit einem ersten Ende (3) und einem zweiten Ende (4) zu formen;
- Einschießen des rohrförmigen Halbzeugs (1) innerhalb eines Formwerkzeugs, das zwei Halbschalen (6, 7) aufweist, wobei die zwei Halbschalen (6, 7) so modelliert sind, dass, wenn das Halbzeug (1) innerhalb des Formwerkzeugs eingeschlossen ist, das erste Ende (3) des Halbzeugs (1) verschlossen ist, während das zweite Ende in Fluidverbindung mit einer Druckluftdüse bleibt;
- Blasen (II) eines Expansionsgases (5) in das Halbzeug (1) durch das zweite Ende (4) hindurch ins Innere des Formwerkzeugs (6, 7), um wenigstens einen Streifen (8) von Behältern (9) zu formen, sodass jeder Behälter (9) mit einem Aufnahmekörper (10) zum Aufnehmen wenigstens eines fluiden Produkts versehen wird, welcher sich an dem ersten Ende (3) in einem geschlossenen Abgabehals (11) erstreckt und welcher sich an dem zweiten Ende (4) in einem offenen Bodenzapfen (15) erstreckt,
wobei die Querabmessungen der Bodenzapfen (15) der Behälter (9) wesentlich kleiner als die Querabmessungen der Aufnahmekörper (10) der Behälter (9) sind, und
wobei die Behälter (9) des Streifens (8) entlang jeweiliger erster Verbindungslinien (13), die an den Aufnahmekörpern (10) definiert sind, und entlang jeweiliger zweiter Verbindungslinien (14), die an den Verschlusskappen (12) definiert sind, lösbar miteinander verbunden sind, wobei sich mindestens eine der ersten Verbindungslinie (13) und der zweiten Verbindungslinie (14) im Wesentlichen längs erstreckt;
- Einleiten (IV) des fluiden Produkts in die Aufnahmekörper (10) durch die Bodenzapfen (15) hindurch; und
- Abdichten (V) der Bodenzapfen (15), um eine Dichtlippe (19) für jeden Behälter (9) auszubilden, wobei die Dichtlippen (19) entlang einer Querrichtung ausgebildet werden, die im Wesentlichen koplanar mit der Ebene ist, in welcher der Streifen (8) liegt, und wobei die Querabmessungen der Dichtlippen (19) wesentlich kleiner als die Querabmessungen der Aufnahmekörper (10) sind,
wobei die Abdichtphase ausgeführt wird, indem die offenen Enden der Bodenzapfen (15) mithilfe von zwei Abdichtstangen (20) zusammengedrückt und abgedichtet werden.

2. Verfahren nach Anspruch 1, **dadurch gekennzeichnet, dass** das Modellieren (I) das Extrudieren des Kunststoffs durch wenigstens ein entsprechendes Extruderwerkzeug (2) umfasst.

3. Verfahren nach Anspruch 1 oder 2, **dadurch gekennzeichnet, dass** das Formwerkzeug (6, 7) derart ausgebildet ist, dass der Aufnahmekörper (10) mit einer abreißbaren Verschlusskappe (12) ausgestattet wird, die von dem Abgabehals (11) lösbar ist.

4. Verfahren nach einem oder mehreren der vorhergehenden Ansprüche,
**dadurch gekennzeichnet, dass** das Formwerkzeug (6, 7) derart ausgebildet ist, dass die Aufnahmekörper (10) mit einer im Wesentlichen axialsymmetrischen und lang gestreckten Form entlang einer Längsrichtung (D) ausgestattet werden, welche sich zwischen dem ersten Ende (3) und dem zweiten Ende (4) erstreckt.

5. Verfahren nach einem oder mehreren der vorhergehenden Ansprüche,
**dadurch gekennzeichnet, dass** das Formwerkzeug (6, 7) derart ausgebildet ist, dass der Aufnahmekörper (10) mit wenigstens einem Wegwerfabschnitt (17) ausgestattet ist, der von dem Bodenzapfen (15) entfernt werden kann.

6. Verfahren nach Anspruch 5, **dadurch gekennzeichnet, dass** es das Entfernen des Wegwerfabschnitts (17) von dem Bodenzapfen (15) umfasst.

## Revendications

1. Procédé de fabrication de récipients pour produits fluides du type médical, pharmaceutique, cosmétique ou similaire, comprenant les phases suivantes :
- modeler (I) au moyen d'une filière d'extrudeuse (2) au moins une couche de matière plastique pour former au moins un produit semi-fini sensiblement tubulaire (1) ayant une première extrémité (3) et une seconde extrémité (4) ;
- enfermer ledit produit semi-fini tubulaire (1) dans un moule de conformation comprenant deux demi-coques (6, 7), lesdites deux demi-coques (6, 7) étant modelées de sorte que, lorsque ledit produit semi-fini (1) est enfermé à l'intérieur du moule de conformation, la première extrémité (3) du produit semi-fini (1) est fermée alors que la seconde extrémité reste en communication fluidique avec une buse pneumatique ;
- souffler (II) un gaz d'expansion (5) dans ledit produit semi-fini (1) à travers ladite seconde extrémité (4) à l'intérieur dudit moule de conformation (6, 7), pour former au moins une bande (8) de récipients (9), afin de munir chaque récipient (9) d'un corps de confinement (10) destiné à contenir au moins un produit fluide qui, au niveau de ladite première extrémité (3), s'étend en un col de distribution formé (11) et qui, au niveau de ladite seconde extrémité (4), s'étend dans une base de fond ouverte (15),
dans lequel les dimensions transversales desdites bases de fond (15) des récipients (9) sont sensiblement inférieures aux dimensions transversales desdits corps de confinement (10) des récipients (9), et
dans lequel lesdits récipients (9) de la bande (8) sont associés amovibles les uns par rapport aux autres selon des premières lignes de connexion respectives (13) définies sur lesdits corps de confinement (10) et selon des secondes lignes de connexion respectives (14) définies sur lesdits capuchons de fermeture (12), avec au moins l'une de ladite première ligne de connexion (13) et de ladite seconde ligne de connexion (14) étant sensiblement longitudinale ;
- introduire (IV) ledit produit fluide dans lesdits corps de confinement (10) à travers lesdites bases de fond (15) ; et
- sceller (V) lesdites bases de fond (15) pour former une lèvre de scellement (19) pour chaque récipient (9), les lèvres de scellement (19) étant formées selon une direction transversale sensiblement coplanaire au plan de pose de ladite bande (8) et les dimensions transversales desdites lèvres de scellement (19) étant sensiblement inférieures aux dimensions transversales desdits corps de confinement (10),
dans lequel la phase de scellement est réalisée par écrasement et par scellement des bords ouverts des bases de fond (15) au moyen de deux barres de scellement (20).

2. Procédé selon la revendication 1, **caractérisé en ce que** ledit modelage (I) comprend l'extrusion de ladite matière plastique à travers au moins une filière d'extrudeuse correspondante (2).

3. Procédé selon la revendication 1 ou 2, **caractérisé en ce que** ledit moule de conformation (6, 7) est modelé de manière à équiper ledit corps de confinement (10) d'un capuchon de fermeture à arracher (12) amovible dudit col de distribution (11).

4. Procédé selon l'une ou plusieurs des revendications précédentes, **caractérisé en ce que** ledit moule de conformation (6, 7) est modelé de manière à équiper lesdits corps de confinement (10) d'une forme sensiblement axialement symétrique et allongée selon une direction longitudinale (D) qui s'étend entre ladite première extrémité (3) et ladite seconde extrémité (4).

5. Procédé selon l'une ou plusieurs des revendications précédentes, **caractérisé en ce que** ledit moule de conformation (6, 7) est modelé de manière à équiper ledit corps de confinement (10) d'au moins une portion de rebut (17) apte à être retirée de ladite base de fond (15).

6. Procédé selon la revendication 5, **caractérisé en ce qu'**il comprend le retrait de ladite portion de rebut (17) de ladite base de fond (15).
